(19) Europäisches Patentamt
European Patent Office
Office européen des brevets

(11) **EP 4 567 558 A1**

(12) **EUROPEAN PATENT APPLICATION**
published in accordance with Art. 153(4) EPC

(43) Date of publication:
**11.06.2025 Bulletin 2025/24**

(21) Application number: **23875120.0**

(22) Date of filing: **20.09.2023**

(51) International Patent Classification (IPC):
**G06F 1/20** (2006.01)         **G06F 1/329** (2019.01)
**G06F 11/30** (2006.01)

(52) Cooperative Patent Classification (CPC):
**G06F 1/20; G06F 1/329; G06F 11/30**

(86) International application number:
**PCT/KR2023/014307**

(87) International publication number:
**WO 2024/076053 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.10.2022 KR 20220126580**
**07.11.2022 KR 20220146870**

(71) Applicant: **Samsung Electronics Co., Ltd.**
**Suwon-si, Gyeonggi-do 16677 (KR)**

(72) Inventors:
• **LEE, Dongjun**
**Suwon-si, Gyeonggi-do 16677 (KR)**
• **KANG, Youngjin**
**Suwon-si, Gyeonggi-do 16677 (KR)**
• **SON, Byoungil**
**Suwon-si, Gyeonggi-do 16677 (KR)**
• **AN, Sungchan**
**Suwon-si, Gyeonggi-do 16677 (KR)**
• **CHAE, Kyumin**
**Suwon-si, Gyeonggi-do 16677 (KR)**
• **HEO, Wonhyung**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD FOR CONTROLLING ELECTRONIC DEVICE ON BASIS OF TEMPERATURE, AND ELECTRONIC DEVICE THEREFOR**

(57)    An embodiment of the present invention may comprise: a temperature sensor (176); a communication module (190); a memory (130); and a processor (120) operatively connected to at least one of the temperature sensor, the communication module, or the memory. The processor may be configured to: measure a current temperature of an electronic device using the temperature sensor; identify a lowest set temperature and a highest set temperature of the electronic device from the memory; calculate a temperature coefficient on the basis of at least one of the measured current temperature of the electronic device, the identified lowest set temperature, and the identified highest set temperature; and control the operation of the communication module on the basis of the calculated temperature coefficient. Various embodiments are possible.

FIG. 2

**Description**

[Technical Field]

An embodiment of the disclosure provides a method for controlling an electronic device based on a temperature and an electronic device therefor.

[Background Art]

In accordance with the development of digital technologies, various types of electronic devices, such as a personal digital assistant (PDA), an electronic notebook, a smartphone, a tablet personal computer (PC), or a wearable device, have been widely used. The electronic devices have been continuously improved in terms of hardware and/or software of the electronic devices to support and increase functions thereof.

As electronic devices provide various services, the issue of overheating has emerged due to excessive usage thereof. For example, when a high-performance application is used on an electronic device for a long period of time, the temperature of the electronic device may increase. The temperature increase of electronic devices may cause damage to the electronic devices. Alternatively, the application of 5G technologies such as mmW in electronic devices may cause specific absorption rate (SAR) issues.

[Disclosure of Invention]

[Technical Problem]

An electronic device may adopt various methods to prevent the temperature of the electronic device from rising to a predetermined temperature or higher. Among various improvement methods, a method of limiting the operation of a communication module is mainly used. The method of limiting the communication module may involve limiting the maximum transmission power of a transmission signal or limiting the number of transmission signals.

An aspect of an embodiment may provide a method and device for preventing sudden performance limitations in communications by linearly controlling operations of a communication module based on the temperature of an electronic device.

[Solution to Problem]

According to an embodiment of the disclosure, an electronic device 101 may include a temperature sensor 176, a communication module 190, a memory 130, and a processor 120 operatively connected to at least one of the temperature sensor, the communication module, or the memory, wherein the processor may be configured to measure a current temperature of the electronic device using the temperature sensor, identify a lowest configuration temperature and a highest configuration temperature of the electronic device from the memory, calculate a temperature coefficient, based on at least one of the measured current temperature of the electronic device, the identified lowest configuration temperature, and the identified highest configuration temperature, and control an operation of the communication module, based on the calculated temperature coefficient.

According to an embodiment of the disclosure, an operation method of an electronic device 101 may include an operation of measuring a current temperature of the electronic device using a temperature sensor 176 of the electronic device, an operation of identifying a lowest configuration temperature and a highest configuration temperature of the electronic device from a memory 130 of the electronic device, an operation of calculating a temperature coefficient, based on at least one of the measured current temperature of the electronic device, the identified lowest configuration temperature, and the identified highest configuration temperature, and an operation of controlling an operation of a communication module 190, based on the calculated temperature coefficient.

[Advantageous Effects of Invention]

According to an embodiment, by continuously monitoring the current temperature of the electronic device, it is possible to control the communication performance gradually in proportion to the current temperature of the electronic device, rather than abruptly limiting communication performance even if the current temperature of the electronic device exceeds the maximum configuration temperature.

According to an embodiment, it may be possible to preconfigure a lowest configuration temperature and a highest configuration temperature of the electronic device and linearly control an operation of the communication module, based on the relationship between a current temperature of the electronic device and the lowest configuration temperature and the highest configuration temperature of the electronic device.

According to an embodiment, it may be possible to stably control heat of the electronic device while maintaining the communication performance of the electronic device, based on the temperature coefficient which is calculated from the relationship between a current temperature and the lowest configuration temperature and the highest configuration temperature of the electronic device.

According to an embodiment, it may be possible to improve the performance of the electronic device and provide a better use environment to users by maintaining a section operating at the maximum transmission power of the communication module for a predetermined time period according to the current temperature of the electronic device.

[Brief Description of Drawings]

FIG. 1 is a block view of an electronic device in a network environment according to an embodiment.

FIG. 2 is a flowchart illustrating an operation method of an electronic device according to an embodiment.

FIG. 3 is a view depicting a temperature coefficient graph of an electronic device according to an embodiment.

FIG. 4A is a view depicting a first graph showing a power change of a communication module according to a current temperature of an electronic device according to an embodiment.

FIG. 4B is a view depicting a second graph showing a power change of a communication module according to a current temperature of an electronic device according to an embodiment.

FIG. 4C is a view depicting a third graph showing a power change of a communication module according to a current temperature of an electronic device according to an embodiment.

FIG. 5 is a flowchart illustrating a method for controlling a communication module according to a current temperature an electronic device in the electronic device according to an embodiment.

[Mode for the Invention]

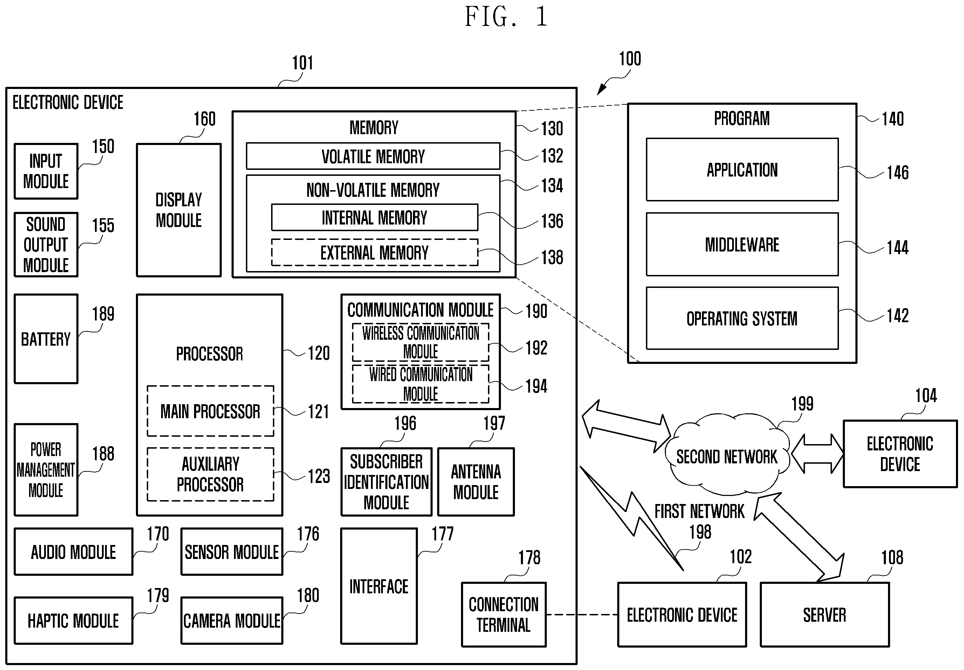

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).

According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/-connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

According to an embodiment of the disclosure, an electronic device (e.g., the electronic device 101 in FIG. 1) may include a temperature sensor (e.g., the sensor module 176 in FIG. 1), a communication module (e.g., the communication module 190 in FIG. 1), a memory (e.g., the memory 130 in FIG. 1), and a processor (e.g., the processor 120 in FIG. 1) operatively connected to at least one of the temperature sensor, the communication module, or the memory, wherein the processor may be configured to measure a current temperature of the electronic device using the temperature sensor, identify a lowest configuration temperature and a highest configuration temperature of the electronic device from the memory, calculate a temperature coefficient, based on at least one of the measured current temperature of the electronic device, the identified lowest configuration temperature, and the identified highest configuration temperature, and control an operation of the communication module, based on the calculated temperature coefficient.

The processor may be configured to, in case that the measured current temperature of the electronic device is equal to or less than the identified lowest configuration temperature, maintain transmission power of the communication module.

The processor may be configured to, in case that the measured current temperature of the electronic device is equal to or less than the identified lowest configuration temperature, configure the temperature coefficient to be a first value and calculate an average power limit value based on the first value and current average power for a predetermined time period.

The processor may be configured to, in case that the measured current temperature of the electronic device exceeds the identified lowest configuration temperature, and is equal to or less than the identified highest configuration temperature, calculate the temperature coefficient, based on the measured current temperature of the electronic device, the identified lowest configuration temperature, and the identified highest configuration temperature and change the transmission power of the communication module based on the calculated temperature coefficient.

The calculated temperature coefficient may be configured to have a value greater than 0 and less than 1 and to change in real time according to the current temperature of the electronic device.

The processor may be configured to calculate the temperature coefficient by dividing a result acquired by subtracting the identified lowest configuration temperature from the measured current temperature of the electronic device by a result acquired by subtracting the identified lowest configuration temperature from the identified highest configuration temperature.

The processor may be configured to calculate an average power limit value based on the temperature coefficient and current average power for a predetermined time period, calculate a power level based on the temperature coefficient and the average power limit value, and change transmission power of the communication module based on the calculated average power limit value and the power level.

The processor may be configured to, in case that the measured current temperature of the electronic device exceeds the identified highest configuration temperature, configure the temperature coefficient to be a second value and calculate an average power limit value based on the second value and current average power for a predetermined time period.

The processor may be configured to calculate a power level based on the second value and the average power limit value and change transmission power of the communication module based on the calculated average power limit value and the power level.

The processor may be configured to, in case that the average power limit value is reduced beyond a power reference value, change a communication method of the communication module.

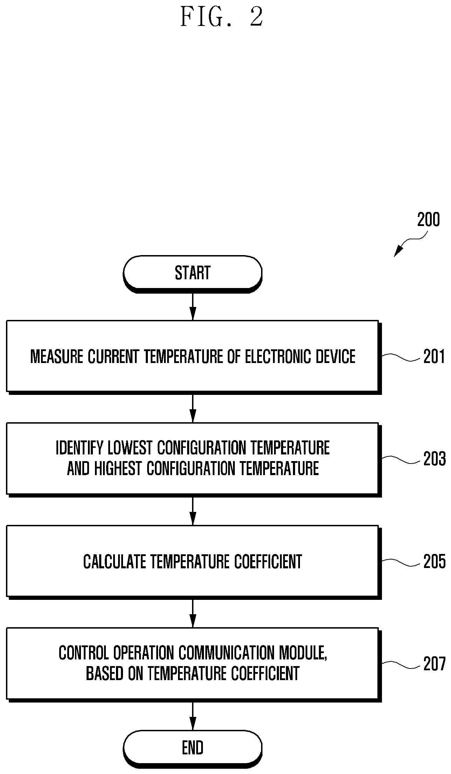

FIG. 2 is a flowchart 200 illustrating an operation method of an electronic device according to an embodiment.

Referring to FIG. 2, in operation 201, a processor (e.g., the processor 120 in FIG. 1) of the electronic device (e.g., the electronic device 101 in FIG. 1) according to an embodiment may measure a current temperature of the electronic device 101. The electronic device 101 may include a temperature sensor (e.g., the sensor module 176). The sensor module 176 may periodically or selectively measure a current temperature of the electronic device 101. The processor 120 may periodically or selectively receive the current temperature of the electronic device 101 from the sensor module 176 in real time.

In operation 203, the processor 120 may identify a lowest configuration temperature and a highest configuration temperature. The lowest configuration temperature may be a lowest temperature configured in the electronic device 101, and the highest configuration temperature may be a highest temperature configured in the electronic device 101. A memory (e.g., the memory 130 in FIG. 1) of the electronic device 101 may store the lowest configuration temperature and the highest configuration temperature. The processor 120 may identify the lowest configuration temperature and the highest configuration temperature from the memory 130.

According to an embodiment, the lowest configuration temperature and the highest configuration temperature may be configured differently for each electronic device 101. For example, the performance of the electronic device (101)

may vary for each electronic device (101), and depending on the performance of the electronic device (101), the cause of increasing or decreasing the temperature of the electronic device (101) may vary when using the electronic device (101). Accordingly, electronic devices having different performances may have different lowest configuration temperatures and highest configuration temperatures. Alternatively, due to the variation between the electronic devices, the electronic devices may have different lowest configuration temperatures and highest configuration temperatures while having the same performance.

**In** operation 205, the processor 120 may calculate a temperature coefficient. The temperature coefficient may be calculated based on at least one of the current temperature (e.g., T) of the electronic device 101, the lowest configuration temperature (e.g., A), or the highest configuration temperature (e.g., B). The processor 120 may calculate (or compute) or configure the temperature coefficient in different manners depending on the current temperature of the electronic device 101. According to an embodiment, during the production stage of the electronic device, temperature coefficients corresponding to each temperature may be configured to values between 0 and 1 through testing and stored in the memory 130 of the electronic device 101. For example, the processor 120 may, in case that the current temperature is equal to or less than the lowest configuration temperature (e.g., the current temperature $T \leq$ the lowest configuration temperature A), configure the temperature coefficient (e.g., F) to be "0" (F=0).

Alternatively, the processor 120 may, in case that the current temperature falls between the lowest configuration temperature and the highest configuration temperature (e.g., the lowest configuration temperature A < the current temperature $T \leq$ the highest configuration temperature B), calculate the temperature coefficient F as shown in Equation 1.

【Equation 1】

$$F = \frac{current\ temperature\ (T) - lowest\ configuration\ temperature\ (A)}{highest\ configuration\ temprature\ (B) - lowest\ configuration\ temperature\ (A)}$$

For example, the processor 120 may, in case that the current temperature exceeds the lowest configuration temperature and the current temperature is equal to or less than the highest configuration temperature, calculate the temperature coefficient F as shown in Equation 1. The processor 120 may calculate the temperature coefficient by dividing a result acquired by subtracting the lowest configuration temperature from the current temperature by a result acquired by subtracting the lowest configuration temperature from the highest configuration temperature. The calculated temperature coefficient may greater than 0 and less than 1 (0 < F < 1).

Alternatively, the processor 120 may, in case that the current temperature exceeds the highest configuration temperature (e.g., the current temperature T > the highest configuration temperature B), configure the temperature coefficient F to be "1" (F=1).

In operation 207, the processor 120 may control an operation of a communication module (e.g., the communication module 190 in FIG. 1) of the electronic device 101 based on the temperature coefficient. For example, the processor 120 may calculate (or configure) an average power limit value of the communication module 190 based on the temperature coefficient. The processor 120 may, in case that the temperature coefficient is "0", maintain power (e.g., the current transmission power) of the communication module 190. The maintaining of the power of the communication module 190 indicates maintaining RF power consistent with a typical time averaged SAR (TAS) operation. The current average power for a predetermined time period may be equal to or less than the average power limit value (e.g., a new average power limit value) of the communication module 190 measured in real time. The processor 120 may calculate the average power limit value based on the temperature coefficient and the current average power for a predetermined time period. The processor 120 may calculate the average power limit value by using Equation 2 below.

【Equation 2】

$$Plimit = RealtimeAveragePower - 3 * FdB$$

Plimit (or New Plimit) may represent the average power limit, Real time Average Power may represent the current average power for a predetermined time period, and F may represent the temperature coefficient. Here, 3 may be a variable value. The variable value in the equation is only an example, and may be configured to a number greater or less than 3 (e.g., 2 or 4) depending on the implementation.

The average power limit value may correspond to a configuration value for limiting power used (or consumed) by the communication module 190. The current temperature of the electronic device 101 may have an inverse relationship with the average power limit value.

In case that the temperature coefficient is greater than 0 and less than 1 (0 < F < 1), the temperature coefficient may change in real time based on the current temperature of the electronic device 101. Since the current temperature of the electronic device 101 changes in real time, the processor 120 may calculate the average power limit value and a power level for the communication module 190 based on the current temperature. The processor 120 may calculate the power level based on the temperature coefficient and the average power limit value. The processor 120 may calculate the power level by using Equation 3 below.

**【Equation 3】**

$$\mathrm{Pr}esave = Plimit - 3*(1+F)dB$$

Presave may represent the power level, Plimit (or New Plimit) may represent the average power limit, and F may represent the temperature coefficient. Here, 3 may be a variable value. The variable value in the equation is only an example, and may be configured to a number greater or less than 3 (e.g., 2 or 4) depending on the implementation.

The processor 120 may control the operation of the communication module 190 by lowering the average power limit value of the communication module 190 as the current temperature increases. When the average power limit value of the communication module 190 is reduced, the power used by the communication module 190 may be reduced. The power level may represent minimum power in the current transmission power of the communication module 190. As the average power limit value is adjusted in real time, the power level may be adjusted accordingly. The power level may be defined as the lowest power of the average power limit value and the sine wave. The power level may not exceed the average power limit value, with its default value being approximately 3 dB lower than the average power limit value and potentially up to 6 dB lower.

As the temperature coefficient increases from 0 to 1, the average power limit value and the power level may be reduced gradually according to the temperature coefficient. Accordingly, the current average power for a predetermined time period may be gradually reduced similar to the average power limit value and the power level. For example, the closer the temperature factor is to 1, the lower the average power limit value and the power level may be. The current transmission power of the communication module 190 may be represented as a sine wave, wherein the highest value of the sine wave may be understood as the maximum power and the lowest value of the sine wave as the lowest power. As the temperature coefficient increases from 0 to 1, a duration of operating at the maximum power among the current powers of the electronic device 101 may be adjusted. For example, as the temperature coefficient increases from 0 to 1, the duration of operating at the maximum power may become shorter.

In case that the temperature coefficient is '1', the variable values in Equation 2 and Equation 3 may be calculated as fixed constants. The processor 120 may, in case that the temperature coefficient is '1' according to Equation 2 and Equation 3, calculate the average power limit value and the power level. For example, in case that the temperature coefficient is '1', the average power limit value may be calculated to be 3 dB lower than the current average power for a predetermined time period (e.g., New Plimit = Real-time Average Power - 3*F dB). The power level may be calculated to be 3 dB lower than the average power limit value (e.g., Presave = New Plimit - 3*(1+F) dB). Therefore, in case that the temperature coefficient is '1', the average power limit value may be 3 dB lower than the current average power for a predetermined time period, and the power level may be 6 dB lower than the current average power over the same time period.

In case that the current temperature of the electronic device 101 exceeds the highest configuration temperature, the average power limit value may be continuously reduced. In case that the average power limit value is reduced beyond (or equal to or greater than) the power reference value, the processor 120 may change a communication mode of the communication module 190 (e.g., state transition from 2TX to 1TX). In accordance with the 5G communication method, one or more transmission signals may be transmitted simultaneously, but the processor 120 may limit the number of transmission signals based on the calculated average power limit value.

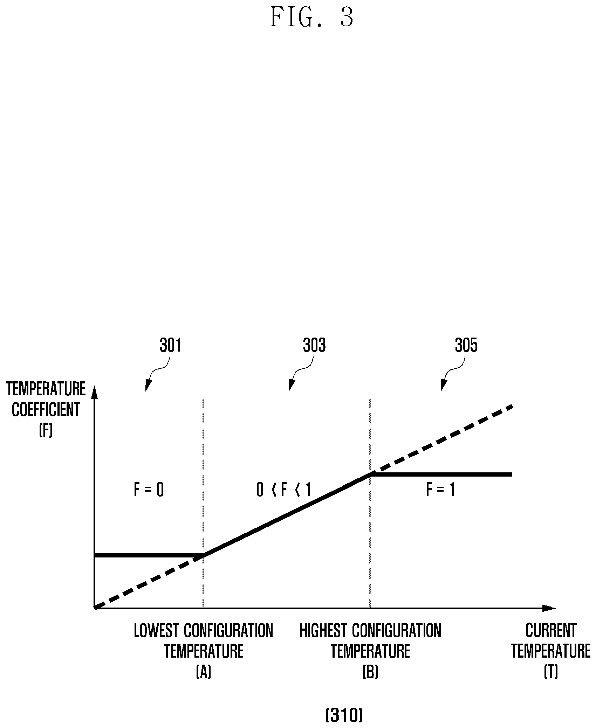

FIG. 3 is a view depicting a temperature coefficient graph 310 of an electronic device according to an embodiment.

Referring to FIG. 3, an electronic device (e.g., the electronic device 101 in FIG. 1) according to an embodiment may measure a current temperature of the electronic device 101 and configure or calculate a temperature coefficient according to the measured current temperature. Referring to the temperature coefficient graph 310, in case that the measured current temperature is equal to or less than the lowest configuration temperature of the electronic device 101 (301), the electronic device 101 may configure the temperature coefficient to be "0". In case that the measured current temperature exceeds the lowest configuration temperature of the electronic device 101 and is equal to or less than the highest configuration temperature (303), the electronic device 101 may calculate the temperature coefficient based on the current temperature, the lowest configuration temperature, and the highest configuration temperature of the electronic device 101. The calculated temperature coefficient may have a value between 0 and 1. In case that the measured current temperature exceeds the highest configuration temperature (305), the electronic device 101 may configure the temperature coefficient to be "1".

The electronic device 101 may configure or calculate the temperature coefficient in real time, based on the current temperature of the electronic device 101 periodically or selectively measured. The electronic device 101 may control an operation of a communication module (e.g., the communication module 190 in FIG. 1) according to the temperature coefficient.

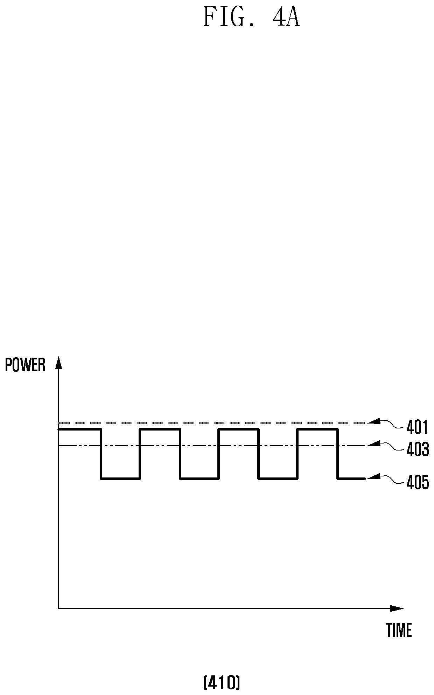

FIG. 4A is a view depicting a first graph 410 showing a power change of a communication module according to a current temperature of an electronic device according to an embodiment.

Referring to FIG. 4A, the first graph 410 may show a power change of the communication module (e.g., the communication module 190 in FIG. 1) in case that the current temperature of the electronic device (e.g., the electronic device 101 in FIG. 1) according to an embodiment is equal to or less than the lowest configuration temperature. The electronic device 101 may, in case that the current temperature is equal to or less than the lowest configuration temperature (e.g., the current temperature T ≤ the lowest configuration temperature A), configure the temperature coefficient (e.g., F) to be "0" (F=0). The electronic device 101 may, in case that the temperature coefficient is "0", maintain power (e.g., the current transmission power) of the communication module 190.

The maintaining of the power of the communication module 190 indicates maintaining RF power consistent with a TAS operation. In the first graph 410, a first signal 401 may represent the maximum transmission power of the communication module 190. A second signal 403 may represent the current average power for a predetermined time period or the average power limit value of the communication module 190 measured in real time. The electronic device 101 may calculate the average power limit value based on the temperature coefficient and the current average power for a predetermined time period as shown in Equation 2. In case that the temperature coefficient is "0", the current average power for a predetermined time period may be identical to or smaller than the average power limit value of the communication module 190 measured in real time. A third signal 405 may represent the current transmission power of the communication module 190.

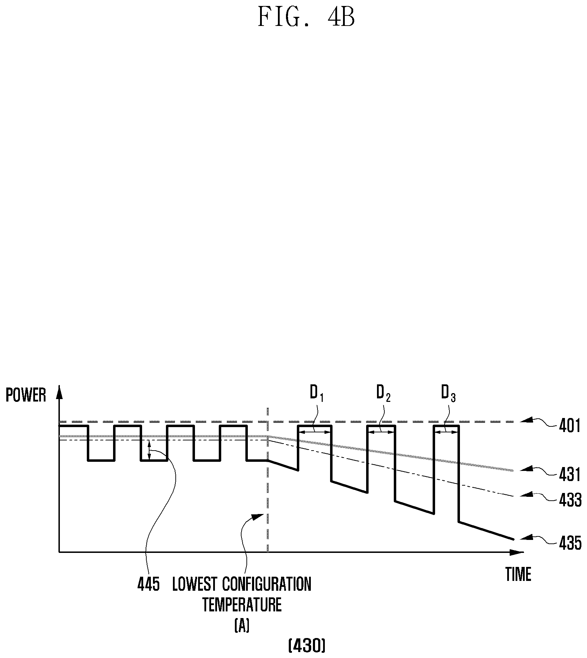

FIG. 4B is a view depicting a second graph 430 showing a power change of a communication module according to a current temperature of an electronic device according to an embodiment.

Referring to FIG. 4B, the second graph 430 may show a power change of the communication module 190 in case that the current temperature of the electronic device 101 exceeds the lowest configuration temperature and is equal to or less than the highest configuration temperature. The electronic device 101 may, in case that the current temperature falls between the lowest configuration temperature and the highest configuration temperature (e.g., the lowest configuration temperature A < the current temperature T ≤ the highest configuration temperature B), calculate the temperature coefficient F as shown in Equation 1. The calculated temperature coefficient may have a value between 0 and 1. The electronic device 101 may calculate the power level and the average power limit value of the communication module 190 based on the calculated temperature coefficient.

In the second graph 430, a first signal 401 may represent the maximum transmission power of the communication module 190, a second signal 431 may represent the current average power for a predetermined time period, and a third signal 433 may represent the average power limit value (Plimit) of the communication module 190. The electronic device 101 may calculate the average power limit value based on the temperature coefficient and the current average power for a predetermined time period as shown in Equation 2. A fourth signal 435 may represent the current transmission power of the communication module 190.

The electronic device 101 may calculate the power level based on the temperature coefficient and the average power limit value as shown in Equation 3 (Presave = Plimit - 3*(1+F) dB). The electronic device 101 may measure the temperature coefficient in real time, calculate a new average power limit value according to the measured temperature coefficient, and determine the power level based on the calculated new average power limit value. The power level may represent the minimum power in the sine wave of the average power limit value and the current transmission power of the communication module 190. The current average power for a predetermined time period (e.g., the second signal 431) may gradually decrease in a manner similar to the average power limit value (e.g., the third signal 433) and the power level (e.g., minimum power of the fourth signal 435). According to Equation 2, the current average power for a predetermined time period may be higher than the average power limit value configured in real-time before converging to the average power limit value. In addition, according to Equation 3, the power level may not exceed the average power limit value, with its default value being approximately 3 dB lower than the average power limit value and potentially up to 3+3F dB lower.

The temperature coefficient may change in real time according to the temperature of the electronic device 101. The average power limit value (New Plimit) and the power level (New Presave) are newly calculated according to the temperature coefficient, and the duration of operating at maximum power in the sine wave may also be adjusted to satisfy same. In case that the current temperature of the electronic device 101 exceeds the lowest configuration temperature and is equal to or less than the highest configuration temperature, the electronic device 101 may compare the new average power limit value (New Plimit) with the current average power limit value (Plimit) and use a lower value.

In the second graph 430, in case that the current temperature of the electronic device 101 is equal to or less than the lowest configuration temperature, the current average power for a predetermined time period is identical to the average power limit value of the communication module 190, and thus the power level may be 3 dB (445).

The current transmission power of the communication module 190 may be represented as a sine wave, wherein the highest value of the sine wave may be understood as the maximum power and the lowest value of the sine wave as the lowest power. As the temperature coefficient increases from 0 to 1, a duration (e.g., D1, D2, or D3) of operating at the maximum power among the current powers of the electronic device 101 may be adjusted. For example, as the temperature coefficient increases from 0 to 1 (e.g., along the time (the X-axis) of the second graph 430), the duration of operating at the maximum power may become shorter. Referring to the second graph 430, it may be identified that a length of D1 is greater than that of D2, and a length of D2 is greater than that of D3.

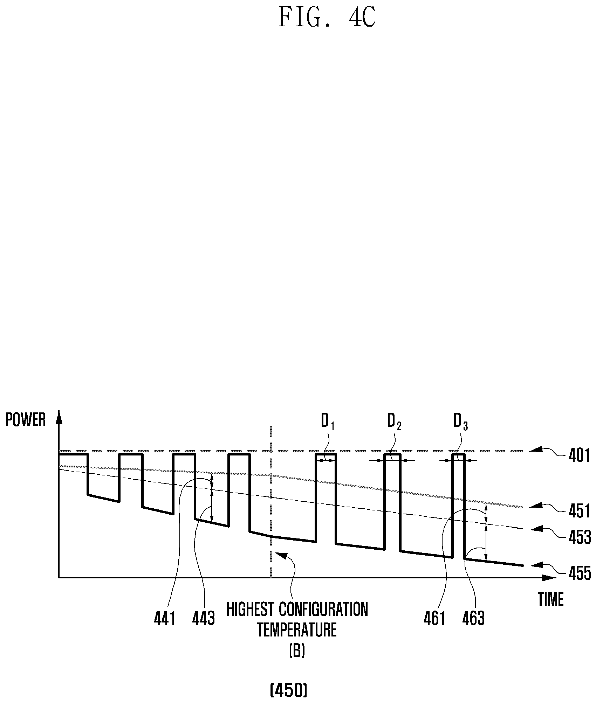

FIG. 4C is a view depicting a third graph 450 showing a power change of a communication module according to a current temperature of an electronic device according to an embodiment.

Referring to FIG. 4C, the third graph 450 may show a power change of the communication module 190 in case that the current temperature of the electronic device 101 exceeds the highest configuration temperature. The electronic device 101 may, in case that the current temperature exceeds the highest configuration temperature (e.g., the current temperature T > the highest configuration temperature B), configure the temperature coefficient F to be "1". The electronic device 101 may calculate the power level and the average power limit value of the communication module 190 based on the temperature coefficient.

In the third graph 450, a first signal 401 may represent the maximum transmission power of the communication module 190, a second signal 451 may represent the current average power for a predetermined time period, and a third signal 453 may represent the average power limit value of the communication module 190 measured in real time. The electronic device 101 may calculate the average power limit value based on the temperature coefficient and the current average power for a predetermined time period as shown in Equation 2. A fourth signal 455 may represent the current transmission power of the communication module 190.

The electronic device 101 may calculate the power level based on the temperature coefficient and the average power limit value as shown in Equation 3. The power level may represent minimum power in the current transmission power of the communication module 190. The current average power for a predetermined time period (e.g., the second signal 451) may gradually decrease in a manner similar to the average power limit value (e.g., the third signal 453) and the power level (e.g., minimum power of the fourth signal 455).

When the current temperature of the electronic device 101 increases, a duration (e.g., D1, D2, or D3) of operating at the maximum power among the current powers of the electronic device 101 may be adjusted according to time. For example, along the time (the x-axis) of the third graph 450, the duration of operating at the maximum power may become shorter. Referring to a fifth graph 450, it may be identified that a length of D1 is greater than that of D2, and a length of D2 is greater than that of D3.

According to Equation 2, the current average power for a predetermined time period may be higher than the average power limit value by 3*F dB (e.g., when F=1, by 3*1 dB) (461). In addition, according to Equation 3, the power level may be reduced up to 6 dB (e.g., when F=1, 3*(1+1) dB) (463).

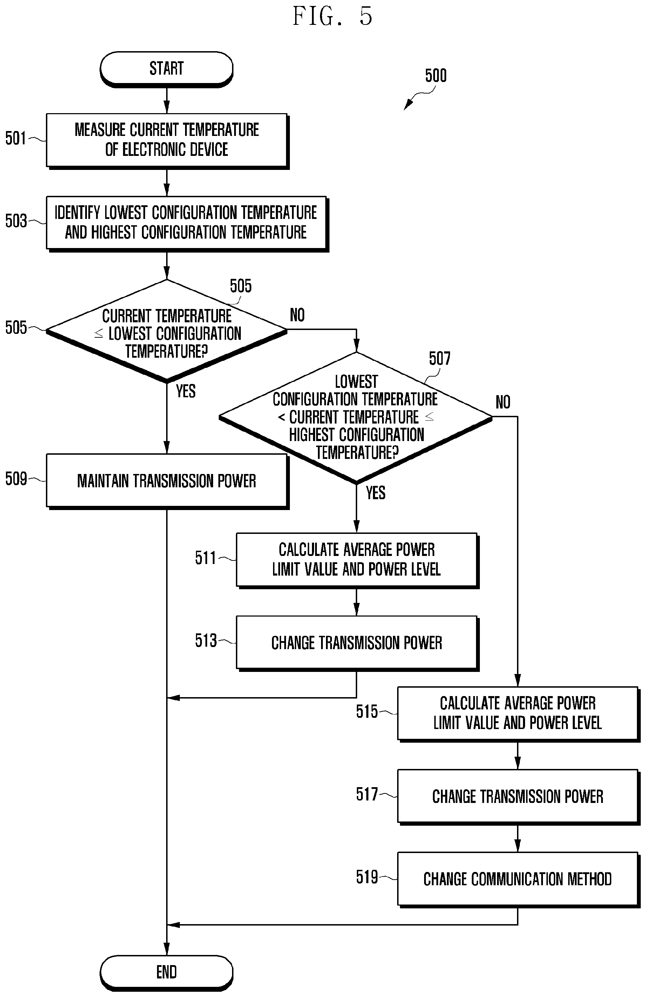

FIG. 5 is a flowchart 500 illustrating a method for controlling a communication module according to a current temperature an electronic device in the electronic device according to an embodiment.

Referring to FIG. 5, in operation 501, a processor (e.g., the processor 120 in FIG. 1) of the electronic device (e.g., the electronic device 101 in FIG. 1) according to an embodiment may measure a current temperature of the electronic device 101. The electronic device 101 may include a temperature sensor (e.g., the sensor module 176). The sensor module 176 may periodically or selectively measure a current temperature of the electronic device 101. The processor 120 may periodically or selectively receive the current temperature of the electronic device 101 from the sensor module 176 in real time.

In operation 503, the processor 120 may identify a lowest configuration temperature and a highest configuration temperature. The lowest configuration temperature may be a lowest temperature configured in the electronic device 101, and the highest configuration temperature may be a highest temperature configured in the electronic device 101. A memory (e.g., the memory 130 in FIG. 1) of the electronic device 101 may store the lowest configuration temperature and the highest configuration temperature. The processor 120 may identify the lowest configuration temperature and the highest configuration temperature from the memory 120.

According to an embodiment, the lowest configuration temperature and the highest configuration temperature may be configured differently for each electronic device 101. For example, the performance of the electronic device 101 may vary for each electronic device 101, and depending on the performance of the electronic device 10), the cause of increasing or decreasing the temperature of the electronic device 101 may vary when using the electronic device 101. Accordingly, electronic devices having different performances may have different lowest configuration temperatures and highest configuration temperatures. Alternatively, due to the variation between the electronic devices, the electronic devices may have different lowest configuration temperatures and highest configuration temperatures while having the same performance.

In operation 505, the processor 120 may determine whether the current temperature (e.g., the measured current temperature) is equal to or less than the lowest configuration temperature. The processor 120 may, in case that the current temperature is equal to or less than the lowest configuration temperature, perform operation 509 and, in case that the current temperature exceeds the lowest configuration temperature, perform operation 507.

Although it is shown that operation 507 is performed after operation 505 in the drawing, operation 505 is performed after operation 507, or operation 505 and operation 507 may be concurrently performed.

In case that the current temperature is equal to or less than the lowest configuration temperature, in operation 509, the processor 120 may maintain the transmission power. The transmission power may represent transmission power of the communication module (e.g., the communication module 190 in FIG. 1). The processor 120 may, in case that the current temperature is equal to or less than the lowest configuration temperature (e.g., the current temperature T ≤ the lowest configuration temperature A), configure the temperature coefficient (e.g., F) to be "0" (F=0). In case that the temperature coefficient is "0", the processor 120 may calculate the average power limit value based on the temperature coefficient and the current average power for a predetermined time period. In case that the temperature coefficient is "0", the current average power for a predetermined time period may be identical to or smaller than the average power limit value of the communication module 190 measured in real time.

In case that the current temperature exceeds the lowest configuration temperature, in operation 507, the processor 120 may determine whether the current temperature exceeds the lowest configuration temperature and is equal to or less than the highest configuration temperature. The processor 120 may, in case that the current temperature exceeds the lowest configuration temperature and is equal to or less than the highest configuration temperature, perform operation 511 and, in case that the current temperature exceeds the highest configuration temperature, perform operation 515.

In case that the current temperature exceeds the lowest configuration temperature and is equal to or less than the highest configuration temperature, in operation 511, the processor 120 may calculate the power level and the average power limit value. The processor 120 may, in case that the current temperature falls between the lowest configuration temperature and the highest configuration temperature (e.g., the lowest configuration temperature A < the current temperature T ≤ the highest configuration temperature B), calculate the temperature coefficient F as shown in Equation 1. The calculated temperature coefficient may have a value between 0 and 1. The processor 120 may calculate the average power limit value of the communication module 190, based on the calculated temperature coefficient and the current average power for a predetermined time period, according to Equation 2. In addition, the processor 120 may calculate the power level, based on the calculated temperature coefficient and the average power limit value, according to Equation 3.

In operation 513, the processor 120 may change the transmission power, based on the average power limit value and the power level. For example, in case that the temperature coefficient has a value between 0 and 1, the average power limit value may be lower than the current average power for a predetermined time period by 3*F dB. The power level may be lower than the average power limit value by 3*(1+F) dB. The processor 120 may change the transmission power of the communication module 190 to gradually reduce the current average power of the communication module similar to the average power limit value and the power level.

In case that the current temperature exceeds the highest configuration temperature, in operation 515, the processor 120 may calculate the power level and the average power limit value. The processor 120 may, in case that the current temperature exceeds the highest configuration temperature (e.g., the current temperature T > the highest configuration temperature B), configure the temperature coefficient F to be "1". The processor 120 may calculate the average power limit value based on the temperature coefficient and the current average power for a predetermined time period as shown in Equation 2. In addition, the processor 120 may calculate the power level based on the temperature coefficient and the average power limit value as shown in Equation 3.

In operation 517, the processor 120 may change the transmission power, based on the average power limit value and the power level. For example, in case that the temperature coefficient has a value of "1", the average power limit value may be lower than the current average power for a predetermined time period by 3dB (e.g., 3*1(F=1)). The power level may be lower than the average power limit value by 6 dB dB(e.g., 3(1+1)(F=1)).

In operation 519, the processor 120 may change a communication method. In case that the current temperature of the electronic device 101 exceeds the highest configuration temperature, the average power limit value may be continuously reduced. In case that the average power limit value is reduced beyond (or equal to or greater than) the power reference value, the processor 120 may reduce the number of transmission signals of the communication module 190 (e.g., state transition from 2TX to 1TX). In accordance with the 5G communication method, one or more transmission signals may be transmitted simultaneously, but the processor 120 may limit the number of transmission signals based on the calculated average power limit value.

According to an embodiment of the disclosure, an operation method of an electronic device 101 may include an operation of measuring a current temperature of the electronic device using a temperature sensor 176 of the electronic device, an operation of identifying a lowest configuration temperature and a highest configuration temperature of the electronic device from a memory 130 of the electronic device, an operation of calculating a temperature coefficient, based on at least one of the measured current temperature of the electronic device, the identified lowest configuration temperature, and the identified highest configuration temperature, and an operation of controlling an operation of a communication module 190 of the electronic device, based on the calculated temperature coefficient.

The operation of controlling may include, in case that the measured current temperature of the electronic device is equal to or less than the identified lowest configuration temperature, an operation of maintaining transmission power of the communication module.

The operation of calculating may include, in case that the measured current temperature of the electronic device is equal to or less than the identified lowest configuration temperature, an operation of configuring the temperature coefficient to be a first value and an operation of calculating an average power limit value based on the first value and current average power for a predetermined time period.

The method may include, in case that the measured current temperature of the electronic device exceeds the identified lowest configuration temperature, and is equal to or less than the identified highest configuration temperature, an operation of calculating the temperature coefficient, based on the measured current temperature of the electronic device, the identified lowest configuration temperature, and the identified highest configuration temperature and an operation of changing the transmission power of the communication module based on the calculated temperature coefficient.

The calculated temperature coefficient may have a value greater than 0 and less than 1 and to be changed in real time according to the current temperature of the electronic device.

The operation of calculating may include an operation of calculating the temperature coefficient by dividing a result acquired by subtracting the identified lowest configuration temperature from the measured current temperature of the electronic device by a result acquired by subtracting the identified lowest configuration temperature from the identified highest configuration temperature.

The method may further include an operation of calculating an average power limit value based on the temperature coefficient and current average power for a predetermined time period, an operation of calculating a power level based on the temperature coefficient and the average power limit value, and an operation of changing transmission power of the communication module based on the calculated average power limit value and the power level.

The operation of calculating may include, in case that the measured current temperature of the electronic device exceeds the identified highest configuration temperature, an operation of configuring the temperature coefficient to be a second value, an operation of calculating an average power limit value based on the second value and current average power for a predetermined time period, and an operation of calculating a power level based on the second value and the average power limit value.

The operation of controlling may include an operation of changing the transmission power of the communication module, based on the calculated average power limit value and the power level.

The method may include, in case that the average power limit value is reduced beyond a power reference value, an operation of changing a communication method of the communication module.

The embodiments disclosed in the specification and the drawings are merely presented as specific examples to easily explain the technical features and help understanding of the disclosure and are not intended to limit the scope of the disclosure. Therefore, the scope of the disclosure should be construed as encompassing all changes or modifications derived from the technical ideas of the disclosure in addition to the embodiments disclosed herein.

**Claims**

1. An electronic device (101) comprising:

   a temperature sensor (176);
   a communication module (190);
   a memory (130); and
   a processor (120) operatively connected to at least one of the temperature sensor, the communication module, or the memory,
   wherein the processor is configured to:

   measure a current temperature of the electronic device by using the temperature sensor;
   identify a lowest configuration temperature and a highest configuration temperature of the electronic device from the memory;
   calculate a temperature coefficient, based on at least one of the measured current temperature of the electronic device, the identified lowest configuration temperature, and the identified highest configuration temperature; and
   control an operation of the communication module, based on the calculated temperature coefficient.

2. The electronic device of claim 1, wherein the processor is configured to, in case that the measured current temperature of the electronic device is equal to or less than the identified lowest configuration temperature, maintain transmission power of the communication module.

3. The electronic device of claim 1, wherein the processor is configured to:

in case that the measured current temperature of the electronic device is equal to or less than the identified lowest configuration temperature, configure the temperature coefficient to be a first value; and
calculate an average power limit value, based on the first value and current average power for a predetermined time period.

4. The electronic device of claim 1, wherein the processor is configured to:

in case that the measured current temperature of the electronic device exceeds the identified lowest configuration temperature and is equal to or less than the identified highest configuration temperature, calculate the temperature coefficient, based on the measured current temperature of the electronic device, the identified lowest configuration temperature, and the identified highest configuration temperature; and
change transmission power of the communication module, based on the calculated temperature coefficient.

5. The electronic device of claim 4, wherein the calculated temperature coefficient has a value greater than 0 and less than 1 and is configured to be changed in real time according to the current temperature of the electronic device.

6. The electronic device of claim 4, wherein the processor is configured to calculate the temperature coefficient by dividing a value acquired by subtracting the identified lowest configuration temperature from the measured current temperature of the electronic device by a value acquired by subtracting the identified lowest configuration temperature from the identified highest configuration temperature.

7. The electronic device of claim 4, wherein the processor is configured to:

calculate an average power limit value, based on the temperature coefficient and current average power for a predetermined time period;
calculate a power level, based on the temperature coefficient and the average power limit value; and
change transmission power of the communication module, based on the calculated average power limit value and the power level.

8. The electronic device of claim 1, wherein the processor is configured to:

in case that the measured current temperature of the electronic device exceeds the identified highest configuration temperature, configure the temperature coefficient to be a second value; and
calculate an average power limit value, based on the second value and current average power for a predetermined time period.

9. The electronic device of claim 8, wherein the processor is configured to:

calculate a power level, based on the second value and the average power limit value; and
change transmission power of the communication module, based on the calculated average power limit value and the power level.

10. The electronic device of claim 9, wherein the processor is configured to, in case that the average power limit value is reduced beyond a power reference value, change a communication method of the communication module.

11. An operation method of an electronic device (101), the method comprising:

measuring a current temperature of the electronic device by using a temperature sensor (176) of the electronic device;
identifying a lowest configuration temperature and a highest configuration temperature of the electronic device from a memory (130) of the electronic device;
calculating a temperature coefficient, based on at least one of the measured current temperature of the electronic device, the identified lowest configuration temperature, and the identified highest configuration temperature; and controlling an operation of a communication module (190) of the electronic device, based on the calculated temperature coefficient.

12. The method of claim 11, wherein the controlling comprises, in case that the measured current temperature of the electronic device is equal to or less than the identified lowest configuration temperature, maintaining transmission power of the communication module.

13. The method of claim 11, wherein the calculating comprises:

in case that the measured current temperature of the electronic device is equal to or less than the identified lowest configuration temperature, configuring the temperature coefficient to be a first value; and calculating an average power limit value, based on the first value and current average power for a predetermined time period.

14. The method of claim 11, comprising:

in case that the measured current temperature of the electronic device exceeds the identified lowest configuration temperature and is equal to or less than the identified highest configuration temperature, calculating the temperature coefficient, based on the measured current temperature of the electronic device, the identified lowest configuration temperature, and the identified highest configuration temperature; and changing transmission power of the communication module, based on the calculated temperature coefficient.

15. The method of claim 14, wherein the calculating comprises calculating the temperature coefficient by dividing a value acquired by subtracting the identified lowest configuration temperature from the measured current temperature of the electronic device by a value acquired by subtracting the identified lowest configuration temperature from the identified highest configuration temperature.

# FIG. 1

ELECTRONIC DEVICE — 101

INPUT MODULE — 150
SOUND OUTPUT MODULE — 155
BATTERY — 189
POWER MANAGEMENT MODULE — 188

DISPLAY MODULE — 160

MEMORY — 130
VOLATILE MEMORY — 132
NON-VOLATILE MEMORY — 134
INTERNAL MEMORY — 136
EXTERNAL MEMORY — 138

PROCESSOR — 120
MAIN PROCESSOR — 121
AUXILIARY PROCESSOR — 123

COMMUNICATION MODULE — 190
WIRELESS COMMUNICATION MODULE — 192
WIRED COMMUNICATION MODULE — 194

SUBSCRIBER IDENTIFICATION MODULE — 196
ANTENNA MODULE — 197

AUDIO MODULE — 170
SENSOR MODULE — 176
HAPTIC MODULE — 179
CAMERA MODULE — 180
INTERFACE — 177
CONNECTION TERMINAL — 178

100

PROGRAM — 140
APPLICATION — 146
MIDDLEWARE — 144
OPERATING SYSTEM — 142

SECOND NETWORK — 199
ELECTRONIC DEVICE — 104
FIRST NETWORK — 198
ELECTRONIC DEVICE — 102
SERVER — 108

EP 4 567 558 A1

# FIG. 2

200

START

MEASURE CURRENT TEMPERATURE OF ELECTRONIC DEVICE — 201

IDENTIFY LOWEST CONFIGURATION TEMPERATURE
AND HIGHEST CONFIGURATION TEMPERATURE — 203

CALCULATE TEMPERATURE COEFFICIENT — 205

CONTROL OPERATION COMMUNICATION MODULE,
BASED ON TEMPERATURE COEFFICIENT — 207

END

# FIG. 3

(310)

# FIG. 4A

POWER

401
403
405

TIME

(410)

FIG. 4B

# FIG. 4C

(450)

# FIG. 5

500

```
                    ┌─────────────┐
                    │    START    │
                    └─────────────┘
                           │
                           ▼
        ┌──────────────────────────────────┐
  501 ──│   MEASURE CURRENT TEMPERATURE     │
        │        OF ELECTRONIC DEVICE       │
        └──────────────────────────────────┘
                           │
                           ▼
        ┌──────────────────────────────────┐
  503 ──│ IDENTIFY LOWEST CONFIGURATION TEMPERATURE │
        │   AND HIGHEST CONFIGURATION TEMPERATURE   │
        └──────────────────────────────────┘
                           │
                           ▼
```

505

505 — CURRENT TEMPERATURE ≤ LOWEST CONFIGURATION TEMPERATURE? — NO

YES

507

LOWEST CONFIGURATION TEMPERATURE < CURRENT TEMPERATURE ≤ HIGHEST CONFIGURATION TEMPERATURE? — NO

YES

509 — MAINTAIN TRANSMISSION POWER

511 — CALCULATE AVERAGE POWER LIMIT VALUE AND POWER LEVEL

513 — CHANGE TRANSMISSION POWER

515 — CALCULATE AVERAGE POWER LIMIT VALUE AND POWER LEVEL

517 — CHANGE TRANSMISSION POWER

519 — CHANGE COMMUNICATION METHOD

```
                    ┌─────────────┐
                    │     END     │
                    └─────────────┘
```

# INTERNATIONAL SEARCH REPORT

| | International application No. |
| --- | --- |
| | **PCT/KR2023/014307** |

## A. CLASSIFICATION OF SUBJECT MATTER

**G06F 1/20**(2006.01)i; **G06F 1/329**(2019.01)i; **G06F 11/30**(2006.01)i

According to International Patent Classification (IPC) or to both national classification and IPC

## B. FIELDS SEARCHED

Minimum documentation searched (classification system followed by classification symbols)

G06F 1/20(2006.01); G01K 1/14(2006.01); G01K 13/00(2006.01); G05D 23/19(2006.01); G08B 1/08(2006.01); G08C 19/12(2006.01); H04B 1/036(2006.01); H04B 1/3827(2015.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 온도 계수(thermal coefficient), 통신 모듈(communication module), 선형(linear), 전력(electric power), 측정(measurement)

## C. DOCUMENTS CONSIDERED TO BE RELEVANT

| Category* | Citation of document, with indication, where appropriate, of the relevant passages | Relevant to claim No. |
| --- | --- | --- |
| X | KR 10-2022-0045256 A (SNAP INC.) 12 April 2022 (2022-04-12)<br>See paragraphs [0043] and [0085]; and claims 1 and 4. | 1-3,11-13 |
| Y | | 4-10,14-15 |
| Y | KR 10-2020-0132161 A (SAMSUNG ELECTRONICS CO., LTD.) 25 November 2020 (2020-11-25)<br>See paragraphs [0082]-[0083], [0120] and [0175]. | 4-10,14-15 |
| A | KR 10-2022-0059276 A (SAMSUNG ELECTRONICS CO., LTD.) 10 May 2022 (2022-05-10)<br>See paragraphs [0012]-[0097]; and figures 1-6. | 1-15 |
| A | KR 10-1198525 B1 (QUALCOMM INCORPORATED) 06 November 2012 (2012-11-06)<br>See paragraphs [0016]-[0062]; and figures 1-7. | 1-15 |
| A | US 2007-0132607 A1 (NAGANO, Hajime) 14 June 2007 (2007-06-14)<br>See paragraphs [0031]-[0052]; and figures 1-12B. | 1-15 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 December 2023** | **14 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014307**

| Patent document cited in search report | | | Publication date (day/month/year) | Patent family member(s) | | | Publication date (day/month/year) |
|---|---|---|---|---|---|---|---|
| KR | 10-2022-0045256 | A | 12 April 2022 | CN | 111052036 | A | 21 April 2020 |
| | | | | CN | 111052036 | B | 01 November 2022 |
| | | | | CN | 115877928 | A | 31 March 2023 |
| | | | | EP | 3676684 | A1 | 08 July 2020 |
| | | | | KR | 10-2020-0043462 | A | 27 April 2020 |
| | | | | KR | 10-2383797 | B1 | 08 April 2022 |
| | | | | US | 10216236 | B1 | 26 February 2019 |
| | | | | US | 10551889 | B2 | 04 February 2020 |
| | | | | US | 11068034 | B2 | 20 July 2021 |
| | | | | US | 11599171 | B2 | 07 March 2023 |
| | | | | US | 2019-0064891 | A1 | 28 February 2019 |
| | | | | US | 2019-0187765 | A1 | 20 June 2019 |
| | | | | US | 2020-0142458 | A1 | 07 May 2020 |
| | | | | US | 2021-0318736 | A1 | 14 October 2021 |
| | | | | US | 2023-0176636 | A1 | 08 June 2023 |
| | | | | WO | 2019-046797 | A1 | 07 March 2019 |
| KR | 10-2020-0132161 | A | 25 November 2020 | EP | 3924802 | A1 | 22 December 2021 |
| | | | | US | 11228986 | B2 | 18 January 2022 |
| | | | | US | 11510153 | B2 | 22 November 2022 |
| | | | | US | 2020-0367176 | A1 | 19 November 2020 |
| | | | | US | 2022-0141777 | A1 | 05 May 2022 |
| | | | | WO | 2020-231009 | A1 | 19 November 2020 |
| KR | 10-2022-0059276 | A | 10 May 2022 | WO | 2022-092580 | A1 | 05 May 2022 |
| KR | 10-1198525 | B1 | 06 November 2012 | CN | 102027431 | A | 20 April 2011 |
| | | | | CN | 102027431 | B | 15 April 2015 |
| | | | | EP | 2304518 | A2 | 06 April 2011 |
| | | | | EP | 2304518 | B1 | 09 May 2018 |
| | | | | JP | 2011-521386 | A | 21 July 2011 |
| | | | | JP | 5362820 | B2 | 11 December 2013 |
| | | | | TW | 201004171 | A | 16 January 2010 |
| | | | | US | 2009-0290625 | A1 | 26 November 2009 |
| | | | | US | 8620235 | B2 | 31 December 2013 |
| | | | | WO | 2009-143487 | A2 | 26 November 2009 |
| | | | | WO | 2009-143487 | A3 | 04 March 2010 |
| US | 2007-0132607 | A1 | 14 June 2007 | JP | 2007-096600 | A | 12 April 2007 |
| | | | | JP | 4633592 | B2 | 16 February 2011 |
| | | | | US | 7561858 | B2 | 14 July 2009 |

Form PCT/ISA/210 (patent family annex) (July 2022)